(19) Europäisches Patentamt
European Patent Office
Office européen des brevets

(11) EP 1 148 095 A1

(12) **EUROPEAN PATENT APPLICATION**

(43) Date of publication:
**24.10.2001 Bulletin 2001/43**

(21) Application number: **00303263.8**

(22) Date of filing: **18.04.2000**

(51) Int Cl.[7]: **C08L 25/12**, C08L 55/02, C08J 5/18, F25D 23/06 // (C08L25/12, 23:08, 55:02), (C08L25/12, 23:08, 55:02, 73:00)

(84) Designated Contracting States:
**AT BE CH CY DE DK ES FI FR GB GR IE IT LI LU MC NL PT SE**
Designated Extension States:
**AL LT LV MK RO SI**

(71) Applicant: **TORAY INDUSTRIES, INC.**
**Tokyo 103-8666 (JP)**

(72) Inventors:
- **Tabata, Yoshizumi**
  **Sodegaura-shi, Chiba 299-0245 (JP)**
- **Oomura, Akihiro**
  **Ichihara-shi, Chiba 299-0124 (JP)**
- **Kido, Ryota**
  **Ichihara-shi, Chiba 299-0124 (JP)**
- **Yamauchi, Koji**
  **Nagoya-shi, Aichi 458-0044 (JP)**
- **Takasaki, Tadakatsu**
  **Ichihara-shi, Chiba 299-0125 (JP)**
- **Nishigaki, Kaoru**
  **Ichihara-shi, Chiba 299-0124 (JP)**

(74) Representative: **Coleiro, Raymond et al**
**MEWBURN ELLIS**
**York House**
**23 Kingsway**
**London WC2B 6HP (GB)**

(54) **Thermoplastic resin composition comprising rubber-reinforced styrenic resin and its extrusion moldings**

(57) A thermoplastic resin comprises a rubber-reinforced styrenic resin (A), and is such that (1) its acetone-soluble fraction has a ratio of Z-average molecular weight/weight-average molecular weight (Mz/Mw) of at least 2, and (2) the proportion of the triad sequences of acrylonitrile-type monomer units existing in the acetone-soluble fraction is at most 10% by weight of the acetone-soluble fraction. The resin may be formulated into a composition additionally comprising, by weight, 100 parts of resin (A), from 0.1 to 10 parts of a vinylic copolymer (B) having an $\overline{Mw}$ of at least 5,500,000, from 0 to 10 parts of an ethylene/(meth)acrylate/carbon monoxide copolymer (C) and from 0.05 to 5 parts of an α-olefin oligomer and/or an ethylene/α-olefin co-oligomer (D). Extrusion moldings and sheets, e.g. for inner boxes of electrical refrigerators, can be made from such a resin (A) and such compositions containing it.



Printed by Jouve, 75001 PARIS (FR)

## Description

The present invention relates to a thermoplastic resin, to a thermoplastic resin composition containing it and to extrusion moldings and sheets from the resin and composition having good chemical resistance, good extrusion moldability and vacuum formability and good appearance.

Acrylonitrile butadiene/styrene (ABS) resins include graft copolymers that are prepared by copolymerizing a dienic rubber component with a vinyl cyanide compound component (e.g., acrylonitrile, methacrylonitrile, etc.) and an aromatic vinyl compound component (e.g., styrene, α-methylstyrene,etc.). As having good impact resistance, high mechanical strength and good moldability and workability, they are widely used in various fields of OA appliances, household appliances, car parts, daily necessities, etc., and have many applications in those fields.

In particular, in the field of household appliances, ABS resins are much used for inner boxes for electrical refrigerators. For such applications, resin sheets are first prepared through sheeting, and then formed into desired shapes through vacuum (or pressure) forming. Therefore, the resin materials for them must have good extrusion moldability (including color stability and gloss retentiveness in hot melting) and good vacuum formability (including uniformity in wall thickness of formed products).

On the other hand, a foaming agent remaining in foamed polyurethanes that are used as a thermal insulator will attack inner boxes made of ABS resins, thereby often causing environmental stress degradation of the resins.

For these reasons, ordinary ABS resins could not enjoy stable extrusion moldability and vacuum formability and good appearance including color stability, gloss retentiveness, etc., and improving them is desired.

Some techniques have been disclosed for improving the above-mentioned characteristics of rubber-reinforced styrenic resins such as typically ABS resins. One is to specifically define the proportion of the triad sequences of acrylonitrile monomer units_existing in the acetone-soluble fraction of the resins, thereby improving the color stability of the resins (see Japanese Patent Laid-Open Nos. 127626/1996, 169999/1996). However, the extrusion moldability and the vacuum formability of the resins are not still satisfactory. Another technique is to use a high-molecular-weight AS for improving the extrusion moldability and the vacuum formability of the resins (see Japanese Patent Laid-Open No. 316390/1995). However, there are problems that the melt viscosity of the thermoplastic resins containing such a high-molecular-weight component increases, and the resins are discolored by the shear heat in extrusion molding.

In order to ensure at most 10 % of the triad sequences therein, the resins must have a constant viscosity in melt. For this, a high-molecular-weight component will be added thereto so as to specifically control the molecular weight distribution of the resins, whereby the melt viscosity of the resins could be well controlled and the intended object could be attained efficiently to a well-balanced degree.

Still another technique disclosed is to add acrylic rubber having a specific structure to ABS resins to thereby improve the chemical resistance of the resins (see Japanese PatentLaid-OpenNos. 170460/1992, 287403/1994, 195599/1995). In this , however, the acrylic rubber added discolors the resins .

Japanese Patent Laid-Open No. 324103/1997 discloses a technique of adding a high-molecular-weight acrylic copolymer to thermoplastic resins to thereby improve the vacuum formability of the resins. Up to the present, however, a technique of ensuring uniform sections with good dimensional stability in vacuum forming of thermoplastic resins while improving the appearances of the formed resin products is disclosed nowhere in related references.

The present invention addresses these problems associated with the related art noted above and seeks to provide a thermoplastic resin composition and its extrusion moldings having well-balanced and good properties of extrusion moldability, vacuum formability, appearances and chemical resistance.

According to a first aspect, the invention provides a thermoplastic resin comprising a rubber-reinforced styrenic resin (A) having acrylonitrile-type monomer units, which is characterized in that (1) its acetone-soluble fraction has a ratio of Z-average molecular weight/weight-average molecular weight (Mz/Mw) of at least 2 and (2) the proportion of the triad sequences of acrylonitrile-type monomer units existing in the acetone-soluble fraction is at most 10% by weight of the acetone-soluble fraction. Preferably, the ratio of the acrylonitrile monomer units to the total of the acrylonitrile-type monomer units and the styrene-type monomer units in the acetone-soluble fraction of the composition, ϕAN/(AN+ST) is from 25 to 55% by weight.

Such a resin (A) may itself be a resin composition comprising, for example, components (a)-(b) or (a)-(c) as later described. Alternatively or additionally, a thermoplastic resin composition may contain such a resin (A) together with other components such as components (B)-(D) as described below.

Such a resin (A) or resin composition (A) - (D) may or may not be present together with at least one other resin (X) or additive, as later described.

According to a second aspect, the invention provides a thermoplastic resin composition comprising 100 parts by weight of a rubber-reinforced styrenic resin (A), from 0.1 to 10 parts by weight of a vinylic copolymer (B) having a weight-average molecular weight of at least 5,500,000, from 0 to 10 parts by weight of an ethylene/(meth)acrylate/carbon monoxide copolymer (C), and from 0.05 to 5 parts by weight of an α-olefin oligomer and/or an ethylene/α-olefin co-oligomer (D) .

According to a third aspect, the invention provides an extrusion molding of the above-mentioned thermoplastic resin (A) or composition containing it, suitable for inner boxes for electric refrigerators.

Preferred embodiments of the invention will now be described in more detail.

Of the thermoplastic resin of the invention, the acetone soluble fraction has a ratio of Z-average molecular weight/weight-average molecular weight (Mz/Mw) of at least 2, preferably at least 2.5.

The weight-average molecular weight (Mw) referred to herein is an index of the mean molecular weight of a polymer, indicating the contribution of the high-molecular-weight fragments of the polymer to the mean molecular weight thereof. This is obtained through gel permeation chromatography (GPC) of a polymer to fractionate it into different eluates, according to the following formula in which Mi indicates the molecular weight of each eluate appearing on the GPC curve, and Ni indicates the molar fraction of each eluate:

$$\text{Weight-Average Molecular Weight (Mw)} = \Sigma(Ni.Mi^2)/\Sigma(Ni.Mi).$$

The Z-average molecular weight (Mz) also referred to herein is another index of the mean molecular weight of a polymer, indicating the contribution of the high-molecular-weight fragments of the polymer to the mean molecular weight thereof to a higher degree. In the same manner as above, this is obtained according to the following formula:

$$\text{Z-Average Molecular Weight (Mz)} = \Sigma(Ni \cdot Mi^3)/\Sigma(Ni \cdot Mi^2)$$

The ratio of Z-average molecular weight/weight-average molecular weight, Mz/Mw, indicates a degree of polydispersion of the polymer measured, and this is an index of the molecular weight distribution of the polymer in the high-molecular-weight region thereof.

Within the range of the ratio, Mz/Mw, defined herein, the thermoplastic resin composition of the invention has good extrudability and formability and its moldings have good appearance .

The proportion of the triad sequences of acrylonitrile-type monomer units existing in the acetone-soluble fraction of the thermoplastic resin composition of the invention must be at most 10 % by weight of the acetone-soluble fraction. The triad sequences of acrylonitrile-type monomer units are the segments of copolymers in the acetone-soluble fraction of the resin composition, and are given by the formula (1) mentioned below. When the copolymers having the segments are exposed to high temperatures, they undergo intramolecular cyclization as in the formula (2) mentioned below, thereby discoloring the resin composition.

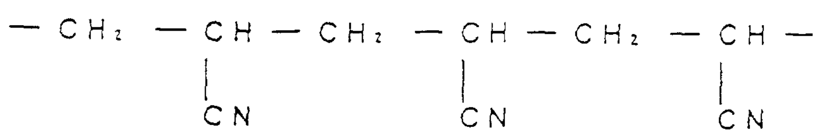

(1)

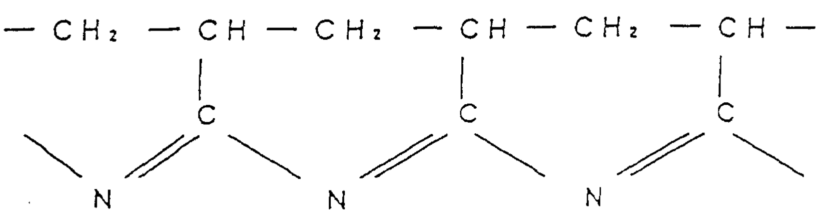

(2)

If the proportion of the triad sequences of acrylonitrile-type monomer units in the acetone-soluble fraction of the thermoplastic resin composition is higher than 10 % by weight of the acetone-soluble fraction, the color stability of the melt of the resin composition is not good. In order that the melt of the resin composition being formed into a sheet may have better color stability, the proportion of the triad sequences is preferably lower than 5 % by weight, more preferably at most 3 % by weight. The thermoplastic resin composition of which the acetone-soluble fraction is so controlled that the proportion of the triad sequences of acrylonitrile-type monomer units existing therein is at most 10 % by weight of

the acetone-soluble fraction can be realized, for example, by using a matrix resin (b) such that the proportion of the triad sequences of acrylonitrile-type monomer units therein is controlled to be at most 10 % by weight as in the above.

Preferably, the ratio of the acrylonitrile-type monomer units to the total of the acrylonitrile-type monomer units and the styrene-type monomer units in the acetone-soluble fraction of the thermoplastic resin composition of the invention, $\phi_{AN/(AN + ST)}$, falls between 25 and 55 % by weight. Having regard to the extrusion moldability and the vacuum formability of the composition, the ratio, $\phi_{AN/(AN + ST)}$, is more preferably from 27 to 50% by weight, even more preferably from 27 to 45% by weight. If the ratio $\phi_{AN/(AN + ST)}$ is smaller than 25 % by weight, the resin composition may lose the excellent mechanical properties intrinsic to ABS resins. On the other hand, if it is larger than 55 % by weight, the color stability of the resin composition may become less when the composition is melted under heat for its extrusion molding or vacuum forming.

The method of producing the rubber-reinforced styrenic resin (A) is not specifically defined. Preferably, it is produced by blending a graft copolymer (a) and a matrix resin (b). The graft copolymer (a) is prepared by copolymerizing a monomer mixture that comprises an aromatic vinyl-type monomer (a styrene-type monomer) and a vinyl cyanide-type monomer (an acrylonitrile-type monomer), in the presence of a rubber-like polymer by a known polymerization technique such as emulsion polymerization, suspension polymerization, bulk polymerization or solution polymerization; and the matrix resin (b) is prepared, separately from (a), by copolymerizing a monomer mixture that comprises an aromatic vinyl-type monomer and a vinyl cyanide-type monomer, also by a known polymerization technique.

Examples of the rubber-like polymer to be used for preparing the graft copolymer are polybutadienes and also styrene-butadiene copolymers, acrylonitrile-butadiene copolymers, styrene-butadiene block copolymers, butyl acrylate-butadiene copolymers and polyisoprene rubbers. Of those, preferred are polybutadienes and styrene-butadiene copolymer rubbers. Preferably, the weight-average particle size of the rubber-like polymer is from 0.1 to 1.5μm, more preferably is from 0.2 to 1.2μm, having regard to impact resistance, moldability and workability, fluidity and appearance of the thermoplastic resin composition and its moldings to be provided.

To the monomer mixture that forms the grafts of the graft copolymer (a), the aromatic vinyl-type monomer (i) and the vinyl cyanide-type monomer (ii) are indispensable, but they may be combined with any other monomer (iii). The aromatic vinyl-type monomer (i) includes, for example, styrene, α-methylstyrene, p-methylstyrene, vinyltoluene, t-butylstyrene, o-ethylstyrene, o-chlorostyrene or o,p-dichlorostyrene. Especially preferred are styrene and α-methylstyrene. One or more of these may be used. The vinyl cyanide compound (ii) includes, for example, acrylonitrile, methacrylonitrile, or ethacrylonitrile. Especially preferred is acrylonitrile.

The additional monomer (iii) includes, for example, α,β-unsaturated carboxylates such as methyl (meth)acrylate (i.e. methyl acrylate or methyl methacrylate), ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate and 2-chloroethyl(meth)acrylate; maleimide compounds such as N-methylmaleimide, N-cyclohexylmaleimide and N-phenylmaleimide; unsaturated dicarboxylic acids such as maleic acid; unsaturated dicarboxylic acid anhydrides such as maleic anhydride; unsaturated amides such as acrylamide· Of those, preferred are methyl methacrylate, N-phenylmaleimide and maleic anhydride.

The rubber-like polymer content of the graft copolymer (a) is preferably from 10 to 90% by weight having regard to impact resistance of the resin composition to be produced herein. More preferably, it is from 40 to 80% by weight. The content of the aromatic vinyl-type monomer (i) in the monomer mixture that forms the grafts of (a) is preferably from 10 to 80% by weight having regard to the moldability and workability of the resin composition. More preferably, it is from 20 to 70% by weight. The content of the vinyl cyanide-type monomer (ii) in the monomer mixture is preferably from 5 to 70% by weight having regard to moldability and workability of the resin composition. More preferably, it is from 10 to 60% by weight. As to graft ratio and the reduced viscosity of the graft copolymer, preferably, the graft ratio is from 10 to 80% by weight and the reduced viscosity of the graft copolymer is from 0.2 to 1.0 dl/g, having regard to impact resistance of the resin composition. The rubber-like polymer content of the rubber-reinforced styrenic resin (A) is preferably from 5 to 40% by weight, more preferably from 10 to 30% by weight, having regard to the balance of impact resistance, stiffness, heat resistance, appearance and fluidity of the resin composition and its moldings. The monomer mixture that forms the matrix resin (b) to be present in the rubber-reinforced styrenic resin (A) in the resin composition of the invention comprises the aromatic vinyl-type monomer (i) and the vinyl cyanide-type monomer (ii) and optionally contains any other monomer (iii). The aromatic vinyl-type monomer (i) includes, for example, styrene, α-methylstyrene, p-methylstyrene, vinyltoluene, t-butylstyrene, o-ethylstyrene, o-chlorostyrene and o,p-dichlorostyrene. Especially preferred are styrene and α-methylstyrene. One or more of these may be used. The vinyl cyanide compound (ii) includes, for example, acrylonitrile, methacrylonitrile and ethacrylonitrile. Especially preferred is acrylonitrile. The additional monomer (iii) includes, for example, α,β-unsaturated carboxylates such as methyl (meth) acrylate, ethyl (meth)acrylate, n-propyl (meth)acrylate, n-butyl (meth)acrylate, t-butyl (meth)acrylate, n-hexyl (meth) acrylate, cyclohexyl (meth)acrylate, chloromethyl (meth)acrylate and 2-chloroethyl (meth)acrylate; maleimide compounds such as N-methylmaleimide, N-cyclohexylmalemide and N-phenylmaleimide; unsaturated dicarboxylic acids such as maleic acid ; unsaturated dicarboxylic acid anhydrides such as maleic anhydride; unsaturated amides such

as acrylamide. Of those, preferred are methyl methacrylate, N-phenylmaleimide and maleic anhydride. As to the blend ratio of the monomers for the monomer mixture that forms the matrix resin (b), the proportion of the vinyl cyanide-type monomer to the other monomers is preferably so controlled that the ratio of the acrylonitrile-type monomer units to the total of the acrylonitrile-type monomer units and the styrene-type monomer units in the acetone-soluble fraction of the thermoplastic resin composition to be obtained herein, $\phi_{AN/(AN + ST)}$ falls between 25 and 55% by weight.

It is desirable that the acetone-soluble fraction of the matrix resin (b) has a limiting viscosity number [η] of from 0.4 to 1.2 dl/g, more preferably from 0.5 to 0.9 dl/g, having regard to vacuum formability, impact resistance and fluidity of the resin composition.

The copolymer for the matrix resin (b) may be produced by any polymerization technique such as emulsion polymerizatior suspension polymerization, bulk polymerization or solution polymerization. The method of feeding the monomers into a reactor where they are polymerized to give the copolymer is not specifically defined. For example, the monomers may be fed into a reactor all at a time in the initial stage of reaction; or a part or all of the monomers may be continuously or intermittently fed into a reactor. The latter method may be adopted to prevent the copolymer formed from having a broad compositional distribution.

The vinylic copolymer (B) for use in the invention is, for example, a copolymer of an aromatic vinyl-type monomer and a vinyl cyanide-type monomer. Preferably, this is a copolymer prepared by copolymerizing a monomer mixture that comprises from 45 to 85 % by weight of the aromatic vinyl-type monomer (a) and from 15 to 55 % by weight of the vinyl cyanide-type monomer (b). Having regard to extrusion moldability, vacuum formability and appearance of the resin composition and its moldings, the ratio of (a) to (b) is more preferably 50 to 80 % by weight/20 to 50 % by weight, even more preferably 45 to 75 % by weight/25 to 35 % by weight. If the proportion of the vinyl cyanide-type monomer (b) is smaller than 15 % by weight, the appearance of the moldings of the resin composition may not be good; but if larger than 55% by weight, the extrusion moldability and the vacuum formability of the resin composition may be poor.

Preferably, the vinylic copolymer (B) has a weight-average molecular weight of at least 5,500,000. If its weight-average molecular weight is smaller than 5,500,000, it is unfavorable since the extrusion moldability, vacuum formability and appearance of the resin composition and its moldings may greatly worsen. More preferably, the vinylic copolymer (B) has a weight-average molecular weight of from 6,000,000 to 12,000,000, even more preferably from 6,000,000 to 9,000,000.

Also preferably, the acetone-soluble fraction of the vinyliccopolymer (B) has a limiting viscosity number [η] of from 5.0 to 10.0 dl/g, more preferably from 6.0 to 9.0 dl/g. If its limiting viscosity number is smaller than 5.0 dl/g or larger than 10.0 dl/g, the extrusion moldability, vacuum formability and appearance of the resin composition and its moldings may be poor.

The content of the vinylic copolymer (B) to be in the resin composition is from 0.1 to 10 parts by weight relative to 100 parts by weight of the rubber-reinforced styrenic resin (A) to be therein, in order to ensure good extrusion moldability, good vacuum formability and good appearance of the resin composition and its moldings. If the content of (B) therein is larger than 10 parts by weight, it is unfavorable since the fluidity of the resin composition lowers; but if smaller than 0.1 part by weight, it is also unfavorable since the extrusion moldability, vacuum formability and appearance of the resin composition and its moldings greatly worsen.

The vinylic copolymer may be produced by any polymerization technique such as emulsion polymerization, suspension polymerization, bulk polymerization or solution polymerization, and the method for producing it is not specifically defined. The method of feeding the monomers into a reactor where they are polymerized to give the copolymer is also not specifically defined. For example, the monomers may be fed into a reactor all at a time in the initial state of reaction; or a portion or all of the monomers may be continuously or intermittently fed into a reactor. The latter method may be adopted to prevent the copolymer formed from having a broad compositional distribution.

The copolymer (C) is a tercopolymer of ethylene/(meth)acrylate/carbon monoxide, in which the ester moiety of the (meth)acrylate may be linear or branched and preferably has from 1 to 18 carbon atoms. Examples of the ester moiety include a methyl group , an ethyl group, an n-propyl group , an n-butyl group, a sec-butyl group, a t-butyl group, an isobutyl group, a hexyl group, a 2-ethylhexyl group and an octyl group.

More preferably, the ester moiety has from 2 to 8 carbon atoms. Regarding the ratio of the monomers constituting the copolymer (C), it is preferable that ethylene accounts for from 10 to 87 % by weight, more preferably from 40 to 80 % by weight, the (meth)acrylate accounts for from 10 to 50 % by weight, more preferably from 15 to 40 % by weight, and carbon monoxide accounts for from 5 to 40 % by weight, more preferably from 5 to 20 % by weight. If desired, the monomers may be copolymerized with any other comonomers.

The content of the copolymer (C) that may be in the resin composition falls between 0 and 10 parts by weight, but preferably between 1 and 7 parts by weight, relative to 100 parts by weight of the rubber-reinforced styrenic resin (A) to be present therein. If the content of (C) is larger than 10 parts by weight, the heat resistance and the stiffness of the resin composition and its moldings becomes lower, and, in addition, the resin moldings will be susceptible to layer peeling.

The monomers for the α-olefin oligomer and/or ethylene/α-olefin co-oligomer (D) for use herein include ethylene and α-olefins having from 3 to 20 carbon atoms, such 'aspropylene, 1-butene, 1-hexene, 4,-methyl-1-pentene, 1-octene, 1-decene, 1-tetradecene, 1-hexadecene, 1-octadence and 1-eicosene.

Preferably, the α-olefin oligomer and/or ethylene/α-olefin co-oligomer (D) for use herein has a kinematic viscosity falling between 5 and 100 cSt at 100°C.

The content of the α-olefin oligomer and/or ethylene/α-olefin co-oligomer (D) to be in the resin composition of the invention is from 0.05 to 5 parts by weight, preferably from 0.1 to 4 parts by weight, relative to 100 parts by weight of the rubber-reinforced styrenic resin (A) to be present therein. With the component (D) falling within the defined range, the resin composition can have improved chemical resistance, and, in addition, its extrusion moldability is good. In particular, while the resin composition is molded through extrusion, it adheres little to the die and the screw current can be kept stable, and therefore, the resin composition can be extruded stably. If, however, the content of (D) in the resin composition is smaller than 0.05 parts by weight, the chemical resistance and the extrusion moldability of the resin composition are not good; and if larger than 5 parts by weight, the mechanical properties of the resin composition are not good.

Without interfering with the object of the invention, any resin (X), for example, vinyl chloride, polyolefins such as polyethylene, polypropylene and others, polyamides such as nylon 6, nylon 66 and others, polyesters such as polyethylene terephthalate, polybutylene terephthalate, polycyclohexanedimethyl terephthalate and others, polycarbonates, and also various elastomers may be added to a thermoplastic resin (A) or to a thermoplastic resin composition of the invention to thereby further improve the properties of the molding resin composition.

The molding resin composition can be identified by the absorption peaks appearing in FT-IR spectrometry.

Likewise, if desired, various types of stabilizers including antioxidants such as hindered phenolic compounds, sulfur-containing organic compounds and phosphorus-containing organic compounds, thermal stabilizers such as phenolic compounds and acrylate compounds, ultraviolet absorbents such as benzotriazole compounds, benzophenone compounds and salicylate compounds, optical stabilizers such as organonickel compounds and hindered amine compounds; as well as lubricants such as metal salts of higher fatty acids and higher fatty acid amides; plasticizers such as phthalates and phosphates; flame retardants and their promoters including halogen-containing compounds such as polybromodiphenyl ether, tetrabromobisphenol A, brominated epoxy oligomers and brominated polycarbonate oligomers, phosphorus-containing compounds and antimony trioxide; odor-masking agents; carbon black, titanium oxide, and other pigments and dyes, may be added to the resin composition. In addition, reinforcing agents and fillers such as glass fibers, glass flakes, glass beads, carbon fibers and metal fibers, may also be added thereto.

For producing the thermoplastic resin composition of the invention, various methods are employed. For example, the constituent components may be melted and kneaded in a Banbury mixer, a roll mixer, or a single-screw or double-screw extruder. The thermoplastic resin composition of the invention is suitable for known extrusion molding, and is especially favorable for extrusion molding to give sheets. For their secondary workability, the sheets of the composition have good vacuum formability. In addition, the thermoplastic resin composition of the invention can be formed into various products in any moldings methods applicable to ordinary thermoplastic resins, for example, through injection molding, blow molding, compression molding and vapor-assisted molding.

Extrusion-molded sheets of the thermoplastic resin composition of the invention have good appearance , and are suitable to vacuum forming to give secondary products. The vacuum-formed secondary products have uniform sections. In particular, the effect of the invention is remarkable when the resin composition is formed into secondary products having a mean wall thickness of 3.0 mm or smaller.

The thermoplastic resin composition of the invention has excellent chemical resistance, and is favorable to inner boxes for electric refrigerators.

EXAMPLES

Specific embodiments of the invention will now be described with reference to the following Examples and Comparative Examples and with reference to the accompanying drawing (Fig.1).

Fig.1 is a schematic view showing the 1/4 ellipsoidal tool used in the chemical resistance test of the composition of the invention.

Unless otherwise specifically indicated, "%" and "part" therein are all by weight.

The methods employed herein for analyzing the resin characteristics of the chemical-resistant, extrusion-molding thermoplastic resin composition are described below. For evaluating the physical properties (e.g., mechanical strength, heat resistance) of the composition, test pieces were formed from the composition through injection molding, and tested according to the test methods mentioned below.

(1) Weight-average particle size of dienic rubber:

This is measured according to the sodium alginate method describedin Rubber Age, Vol. 88, pp. 484-490

(1960) byE. Schmidt & P.H. Biddison. (The particle size of polybutadiene particles capable of being formed into creamy emulsion with sodium alginate varies, depending on the concentration of sodium alginate. Based on this fact, polybutadiene particles to be tested are formed into a creamy emulsion with a varying amount of sodium alginate. From the proportion by weight of the polybutadiene particles having been formed into a creamy emulsion with sodium alginate, relative to the cumulative weight fraction of sodium alginate needed for forming the creamy emulsion, derived is the particle size of the polybutadiene particles at 50 % of the sodium alginate cumulative weight fraction.)

(2) Measurement of molecular weight:

One gram of a piece of resin moldings (e.g., sheets and other products) or resin pellets are refluxed in 200ml of acetone for 3 hours, and the resulting solution is centrifuged at 8800 rpm (10000 G) for 40 minutes, and then filtered to remove the insoluble fraction. The resulting filtrate is concentrated in a rotary evaporator, and the precipitate (acetone-soluble fraction) is dried at 60°C under reduced pressure for 5 hours, and then subjected to gel permeation chromatography (GPC) to measure the molecular weight of the acetone-soluble fraction.

A. Solvent: tetrahydrofuran.
B. Flow rate: 1.0 ml/min.
C. Temperature: 23°C.
D. Sample solution: 0.3 % (completely dissolved).
E. Amount of sample: 200 μl.
E. Filtration: with 0.5 μ filter.
F. Detector: differential diffractometer.

(3) Graft ratio:

Acetone is added to a predetermined amount (m) of a graft copolymer to be measured, and refluxed for 3 hours. The resulting solution is centrifuged at 8800 rpm (10000 G) for 40 minutes, and then filtered to remove the insoluble fraction. The insoluble fraction is dried at 60°C under reduced pressure for 5 hours, and its weight (n) is measured. The graft ratio of the graft copolymer is represented by the formula mentioned below, in which L indicates the rubber content of the graft copolymer.

$$\text{Graft ratio (\%)} = \{[(n) - (m) \times L]/[(m) \times L]\} \times 100$$

(4) Limiting viscosity number [η]:

200 ml of acetone is added to 1 g of a sample to be measured, and refluxed for 3 hours . The resulting solution is centrifuged at 8800 rpm (10000 G) for 40 minutes, and then filtered to remove the insoluble fraction. The resulting filtrate is concentrated in a rotary evaporator, and the precipitate (acetone-soluble fraction) is dried at 60°C under reduced pressure for 5 hours. Using an Ubbelohde's viscometer, the viscosity of the thus-dried acetone-soluble fraction in methyl ethyl ketone is measured at 30°C in terms of η sp/c, and the limiting viscosity number [η] thereof is derived from it.

(5) Acrylonitrile monomer unit content and styrene monomer unit content of acetone-soluble fraction:

As in (3), 200 ml of acetone is added to 1 g of a sample to be measured, and refluxed in a water bath at 70°C for 3 hours. The resulting solution is centrifuged at 8800 rpm (10000 G) for 40 minutes, and then filtered to remove the insoluble fraction. The resulting filtrate is concentrated in a rotary evaporator to obtain a precipitate (acetone-solublefraction). The precipitate is hot-pressed at 220°C and formed into a film having a thickness of 30 ± 5 μm. This is subjected to FT-IR spectrometry. From the peak area appearing in the FT-IR chart as below, the acrylonitrile monomer unit content and the styrene monomer unit content of the sample are derived.
Acrylonitrile monomer unit:

Peak at 2240 $cm^{-1}$ assigned to -C≡N stretching vibration. Styrene monomer unit:
Peak at 1605 $cm^{-1}$ assigned to benzene ring stretching vibration.

(6) Acrylonitrile monomer unit content and styrene monomer unit content of matrix resin (b):

These are obtained in the same manner as in (4), for which, however, a sample of the matrix (b) is tested herein in place of the precipitate (acetone-soluble fraction) in (4).

(7) Proportion of triad sequences of acrylonitrile monomer units in acetone-soluble fraction:

In the same manner as in (4), a precipitate (acetone-soluble fraction) is isolated from a sample. This is subjected to $^{13}C$-NMR in which the signal shift appearing for the α-carbon in each acrylonitrile monomer unit shall vary to some detectable degree, depending on the type of the monomer units neighboring on the acrylonitrile monomer unit. Based on this fact, the proportion of the triad sequences of acrylonitrile monomer units is quantitatively derived from the integrated signal intensity, and is expressed in terms of the weight fraction of the center unit in every triad sequence of acrylonitrile monomer units relative to all monomer units in the acetone-soluble fraction. The condition for the measurement is mentioned below.

Device used: JEOL JNM-GSX400 Model.
Frequency for measurement: 100.5 MHz.
Solvent: DMSO-$d_6$.
Concentration: 445 mg/2.5 ml.
Chemical shift standard: $Me_4Si$.
Temperature: 110°C.
Width for measurement: 20000 Hz.
Data point: 32K.
Flip angle: 90° (21 μsec).
Pulse delay time: 5.0 sec.
Number of integrations: 7400 or 8400.
Decoupling: gated decoupling (without NOE).
Assignment of acrylonitrile sequences (A: acrylonitrile, S: styrene):

-A-A-A-: 118.6 to 119.2 ppm.
-A-A-S-: 119.3 to 120.2 ppm.
-S-A-S-: 120.2 to 121.3 ppm.

(8) Proportion of triad sequences of acrylonitrile monomer units in matrix resin (b):

This is obtained in the same manner as in (6), for which, however, a sample of the matrix (b) is tested herein in place of the precipitate (acetone-soluble fraction) in (6).

(9) Chemical resistance:

A press-formed test piece (127 x 12.7 × 1.5 mm) is fixed along the 1/4 ellipsoidal tool shown in Fig. 1, and the tool with the test piece mounted thereon is put into a 300-mmφ desiccator filled with 250 ml of Fleon 141b. This is left in the atmosphere at 23°C for 24 hours, and checked for crazes and cracks. According to the following numerical formula, the critical strain (%) of the sample tested is calculated. Samples with a critical strain below 0.5 % are bad; those with it falling between 0.5% and 1.0% are no good; those with it falling between 1.0% and 2.0 % are good; and those with it over 2.0% are excellent.

$$\varepsilon\ (\%) = [b \cdot t/2a^2][1 - X^2(a^2 - b^2)/a^4]^{-3/2} \times 100$$

wherein:

ε indicates the critical strain (%) of the sample;
a indicates the major axis (mm) of the tool used (this is 127 mm);
b indicates the minor axis (mm) of the tool (this is 38 mm);
t indicates the thickness of the test piece (mm) (this is 1.5 mm);
X indicates the length (mm) of the crack in the lengthwise direction of the test piece.

(10) Measurement of glossiness:

The surface of a sheet formed through extrusion molding is tested with a Suga Test Instruments' digital angle-varying glossimeter, UGV-5D, for its glossiness by measuring the intensity of the light reflected on the surface at an incident angle of 60 degrees.

(11) Vacuum formability:

A sheet having a square dimension of 500 mm × 500 mm and a thickness of from 1.5 to 3.0 mm is formed into a box through vacuum forming with a plug-assisted vacuum-forming machine. The wall thickness of the box is measured at 10 different points, and the difference between the maximum value and the minimum value of the data measured is obtained. Samples tested are evaluated in the manner mentioned below.

A. Condition for vacuum forming:

a. Temperature (sheet surface temperature): 150°C.
b. Cooling time: 30 sec.

B. Criteria for evaluation:

Excellent: not larger than 0.1 mm.
Good: over 0.1 mm but not larger than 0.3 mm.
No good: over 0.3 mm but not larger than 1 mm.
Bad: over 1 mm.

(12) Color of sheet (in terms of Y.I. value):

This is measured according to JIS K7103, for which is tested a sample prepared by cutting the resin plate in (10) to have a square dimension of 100 mm × 100 mm.

(13) Flexural modulus:

Measured according to ASTM D790 (at 23°C).

(14) Izod impact strength:

Measured according to ASTM D256 (at 23°C with V-notch).

(15) MFR (melt flow rate):

Measured according to ISO 1133 (at 220°C under a load of 98 N).

Reference Example:

(A) Rubber-reinforced thermoplastic styrenic resin:

(a) Graft copolymer:

a1:

Into a reactor having been purged with nitrogen, were plaoed 120 parts of pure water, 0.5 part of glucose, 0.5 part of sodium pyrophosphate, 0.005 part of ferrous sulfate, and a predetermined amount of polybutadiene latex as in Table I below. With stirring, these were heated up to 65°C. After the inner temperature reached 65°C at which the intended polymerization is started, a mixture of predetermined amounts of monomers and t-dodecylmercaptan as in Table 1 was continuously added thereto over a period of 5 hours. At the same time , an aqueous solution of cumeme hydroperoxide as in Table 1 and potassium oleate was continuously added thereto over a period of 7 hours, and the reaction was finished.

To the resulting latex, was added 1 part by weight, relative to 100 parts by weight of the solid fraction of the

latex, of 2,2'-methylenebis(4-methyl-6-t-butylphenol). Next, this was solidified with sulfuric acid, then neutralized with sodium hydroxide, washed through filtration, and dried to give a powdery graft copolymer. The graft ratio of the graft copolymer was 45 %.

a2 to a6:

As for a1, other graft copolymers were produced in varying ratios as in Table 1.

(b) Vinylic copolymer:

b1:

A monomer mixture comprising 70 % by weight of styrene and 30 % by weight of acrylonitrile was polymerized in bulk to prepare pellets of a copolymer. The limiting viscosity number [η] of the copolymer was 0.70 dl/g.

b2:

A monomer mixture comprising 60 % by weight of styrene and 40 % by weight of acrylonitrile was polymerized in suspension to prepare beads of a copolymer. The limiting viscosity number [η] of the copolymer was 0.65 dl/g.

b3:

A monomer mixture comprising 80 % by weight of styrene and 20 % by weight of acrylonitrile was polymerized in bulk to prepare pellets of a copolymer. The limiting viscosity number [η] of the copolymer was 0.28 dl/g.

b4:

A monomer mixture comprising 50 % by weight of styrene and 50 % by weight of acrylonitrile was polymerized in bulk to prepare pellets of a copolymer. The limiting viscosity number [η] of the copolymer was 1.50 dl/g.

(B) Vinylic copolymer:

B1:

A monomer mixture comprising 75 % by weight of styrene and 25 % by weight of acrylonitrile was polymerized in emulsion to prepare a powdery copolymer. The weight-average molecular weight of the copolymer was 6,500,000; and the limiting viscosity number [η] thereof was 6.0 dl/g.

B2:

A monomer mixture comprising 70 % by weight of styrene and 30 % by weight of acrylonitrile was polymerized in suspension to prepare beads of a copolymer. The weight-average molecular weight of the copolymer was 7,000,000; and the limiting viscosity number [η] thereof was 7.5 dl/g.

B3:

75 % by weight of styrene and 25 % by weight of acrylonitrile were polymerized in bulk to prepare pellets of a copolymer. The weight-average molecular weight of the copolymer was 5,500,000; and the limiting viscosity number [η] thereof was 6.2 dl/g.

B4:

75 % by weight of styrene and 25 % by weight of acrylonitrile were polymerized in emulsion to prepare a powdery copolymer. The weight-average molecular weight of the copolymer was 1,800,000; and the limiting viscosity number [η] thereof was 2.5 dl/g.

(C) Ethylene/(meth)acrylate/carbon monoxide copolymer:

C1: Mitsui DuPont Polychemical's Elvaloy EP4051.
C2: Mitsui DuPont Polychemical's Elvaloy HP553.

(D) α-olefin oligomer and/or ethylene/α-olefin co-oligomer:

D1: Mitsui Chemical's Lucant HC10, having a kinematic viscosity of 10 cSt at 100°C.
D2: Mitsui Chemical's Lucant HC20, having a kinematic viscosity of 20 cSt at 100°C.
D3: Mitsui Chemical's Lucant HC600, having a kinematic viscosity of 600 cSt at 100°C.

Examples 1 to 8, Comparative Examples 1 to 5:

The rubber-reinforced styrenic resin (A), the vinylic copolymer (B), the ethylene/(meth)acrylate/carbon monoxide copolymer (C) , the vinylic copolymer, and the α-olefin oligomer and/or ethylene/α-olefin co-oligomer (D) all prepared in the Reference Example were blended in different ratios as in Table 2 and Table 3 below, then melted and kneaded in a 40 mmϕ single-screw extruder, and pelletized therethrough into resin pellets.
The resulting pellets were formed into test pieces , using a Toshiba Kikai's in jection-moldingmachine, IS-50A. They were tested for their properties, and the test data are given in Tables 4 and 5.
From Examples 1 to 8 , it is understood that the chemical-resistant, extrusion-molding thermoplastic resin composition of the invention, which comprises the constituent components in the ratio defined herein, has good chemical resistance, good extrudability, good vacuum formability, good impact resistance, good appearance and good workability. Since resin composition of the invention has good vacuum formability, good chemical resistance and good appearance , as so demonstrated herein, it is favorable for inner boxes for refrigerators.
On the other hand, the samples of Comparative Examples are outside the scope of the invention with respect to one of the ratio of Z-average molecular weight/weight-average molecular weight (Mz/Mw) of the acetone-soluble fraction of the thermoplastic resin composition, and the proportion of the triad sequences of acrylonitrile monomer units existing in the acetone-soluble fraction. Therefore, one of their chemical resistance, extrusion moldability, vacuum formability and appearances is not good.

Table 1

| Graft copolymer (a) | a1 | a2 | a3 | a4 | a5 | a6 |
|---|---|---|---|---|---|---|
| Weight-average particle size (µm) of dienic rubber | 0.40 | 0.50 | 0.35 | 0.25 | 0.25 | 0.05 |
| Dienic rubber | | | | | | |
| Polybutadiene (solid fraction) (part) | 50 | 0 | 45 | 50 | 85 | 50 |
| Styrene-butadiene (25 wt.%/75 wt.%) copolymer (solid fraction) (part) | 0 | 45 | 0 | 0 | 0 | 0 |
| Monomer mixture | | | | | | |
| Acrylonitrile (part) | 13 | 14 | 8 | 13 | 4 | 13 |
| Styrene (part) | 37 | 41 | 28 | 37 | 11 | 37 |
| Methyl methacrylate (part) | 0 | 0 | 19 | 0 | 0 | 0 |
| Initiator, Chain transfer agent (amount added) | | | | | | |
| Cumeme hydroperoxide (part) | 0.20 | 0.15 | 0.15 | 0.10 | 0.25 | 0.15 |
| T-dodecylmercaptan (part) | 0.25 | 0.25 | 0.40 | 0.30 | 0.20 | 0.25 |
| Graft ratio (%) | 45 | 25 | 20 | 15 | 110 | 35 |

Table 2

| | (A) Rubber-reinforced styrenic resin | | (B) Vinylic copolymer [part] | (C) Ethylene/-(meth)-acrylate/-carbon monoxide copolymer [part] | (D) α-olefin oligomer and/or co-oligomer [part] | Acetone-soluble fraction of thermoplastic resin | | |
|---|---|---|---|---|---|---|---|---|
| | a Graft copolymer [part] | b Vinylic copolymer [part] | | | | Molecular weight distri-bution Mz/Mw | Proportion of triad sequences of AN units | AN/(AN+ST) |
| Example 1 | a1: 25 | b1: 75 | B1: 1 | C1: 2 | D1: 1 | 3.6 | 3.1 | 29.4 |
| Example 2 | a4: 30 | b1: 70 | B1: 2 | C2: 4 | D2: 0.5 | 3.6 | 3.2 | 28.9 |
| Example 3 | a3: 25 | b1: 75 | B2: 1 | C1: 4 | D1: 1 | 3.1 | 2.9 | 27.6 |
| Example 4 | a1: 35 | b2: 65 | B1: 1 | C2: 3 | D1: 2 | 3.3 | 1.5 | 37.0 |
| Example 5 | a1: 15 | b1: 85 | B3: 0.5 | C2: 3 | D2: 1 | 3.4 | 3.1 | 29.7 |
| Example 6 | a1: 50 | b1: 50 | B1: 3 | C1: 3 | D1: 2 | 3.1 | 3.2 | 28.7 |
| Example 7 | a5: 25 | b1: 75 | B2: 2 | C2: 6 | D1: 0.5 | 3.2 | 3.1 | 29.8 |
| Example 8 | a6: 25 | b1: 75 | B1: 1 | C1: 5 | D3: 1 | 3.2 | 3.0 | 29.4 |

Mz = Z-average molecular weight, Mw = weight-average molecular weight.

Table 3

| | (A) Rubber-reinforced styrenic resin | | (B) Vinylic copolymer [part] | (C) Ethylene/-(meth)-acrylate/-carbon monoxide copolymer [part] | (D) α-olefin oligomer and/or co-oligomer [part] | Acetone-soluble fraction of thermoplastic resin | | |
|---|---|---|---|---|---|---|---|---|
| | a Graft copolymer [part] | b Vinylic copolymer [part] | | | | Molecular weight distri-bution Mz/Mw | Proportion of triad sequences of AN units | AN/(AN+ST) |
| Comp. Ex. 1 | a1: 25 | b3: 75 | 0 | C1: 2 | D1: 2 | 1.5 | 7.5 | 29.4 |
| Comp. Ex. 2 | a1: 30 | b4: 70 | B1: 2 | C1: 2 | 0 | 3.2 | 12.3 | 29.3 |
| Comp. Ex. 3 | a2: 25 | b3: 75 | B1: 0.05 | C2: 1 | D2: 1 | 1.5 | 7.5 | 33.9 |
| Comp. Ex. 4 | a1: 25 | b4: 75 | B4: 2 | C1: 2 | D1: 2 | 3.5 | 14.5 | 29.4 |
| Comp. Ex. 5 | a1: 20 | b4: 80 | B1: 1 | C2: 11 | D2: 11 | 3.7 | 17.7 | 29.6 |

Mz = Z-average molecular weight, Mw = weight-average molecular weight.

Table 4

| Properties | Unit | Example 1 | Example 2 | Example 3 | Example 4 | Example 5 | Example 6 | Example 7 | Example 8 |
|---|---|---|---|---|---|---|---|---|---|
| Flexural modulus | MPa | 2200 | 1900 | 2100 | 1700 | 2300 | 1400 | 1900 | 1950 |
| Izod impact strength | J/m | 260 | 320 | 280 | 360 | 200 | 470 | 390 | 340 |
| Deflection temperature under load | °C | 87 | 83 | 85 | 83 | 88 | 80 | 88 | 85 |
| MFR (220°C, 98N) | g/10 min. | 5.4 | 4.9 | 5.4 | 7.1 | 5.6 | 5.1 | 5.2 | 5.6 |
| Color of sheet (Y.I. value) | - | 23.5 | 23.1 | 20.5 | 27.5 | 23.6 | 22.5 | 23.6 | 23.5 |
| Chemical resistance | - | Excellent | Excellent | Excellent | Excellent | Excellent | Excellent | Excellent | Excellent |
| Glossiness | % | 90 | 92 | 90 | 90 | 89 | 91 | 92 | 90 |
| Vacuum formability<br>thickness of sheet | -<br>mm | Excellent<br>2.3 | Excellent<br>2.1 | Excellent<br>2.3 | Excellent<br>1.8 | Excellent<br>1.9 | Excellent<br>2.1 | Excellent<br>2.1 | Excellent<br>2.1 |
| Limiting viscosity number [η] | dl/g | 0.60 | 0.63 | 0.60 | 0.53 | 0.60 | 0.57 | 0.63 | 0.60 |

Table 5

| Properties | Unit | Comp. Ex. 1 | Comp. Ex. 2 | Comp. Ex. 3 | Comp. Ex. 4 | Comp. Ex. 5 |
|---|---|---|---|---|---|---|
| Flexural modulus | MPa | 2200 | 2150 | 2400 | 2250 | 2400 |
| Izod impact strength | MPa | 160 | 230 | 150 | 190 | 110 |
| Deflection temperature under load | J/m | 87 | 85 | 87 | 86 | 89 |
| MFR (220°C, 98N) | °C | 57.8 | 1.6 | 58.3 | 1.3 | 1.1 |
| Color of sheet (Y.I. value) | - | 22.9 | 33.5 | 27.9 | 37.5 | 43.5 |
| Chemical resistance | - | Excellent | Good | Excellent | Excellent | Excellent |
| Glossiness | % | 76 | 90 | 79 | 90 | 89 |
| Vacuum formability<br>Thickness of sheet | <br>mm | Bad<br>2.1 | No good<br>2.7 | Bad<br>2.4 | Bad<br>2.4 | No good<br>1.6 |
| Limiting viscosity number [η] | dl/g | 0.30 | 1.32 | 0.30 | 1.38 | 1.42 |

## Claims

**1.** A thermoplastic resin comprising a rubber-reinforced styrenic resin (A) having acrylonitrile-type monomer units **characterized in that**:

(1) its acetone-soluble fraction has a ratio of Z-average molecular weight/weight-average molecular weight (Mz/Mw) of at least 2, and

(2) the proportion of the triad sequences of acrylonitrile-type monomer units existing in the acetone-soluble fraction is at most 10% by weight of the acetone-soluble fraction.

**2.** A thermoplastic resin according to claim 1, of which the ratio of the acrylonitrile-type monomer units to the total of the acrylontrile-type monomer units and the styrene-type monomer units in the acetone-soluble fraction, $\phi_{AN/(AN+ST)}$ is from 25 to 55% by weight.

**3.** A thermoplastic resin composition comprising 100 parts by weight of a rubber-reinforced styrenic resin (A), from 0.1 to 10 parts by weight of a vinylic copolymer (B) having a weight-average molecular weight of at least 5,500,000, from 0 to 10 parts by weight of an ethylene/ (meth)acrylate/carbon monoxide copolymer (C), and from 0.05 to 5 parts by weight of an $\alpha$-olefin oligomer and/or an ethylene/$\alpha$-olefin co-oligomer (D).

**4.** An extrusion molding of a thermoplastic resin composition according to claim 1 or 2.

**5.** An extrusion molding of a thermoplastic resin composition according to claim 3.

**6.** A sheet formed from a thermoplastic resin composition according to claim 1 or 2.

**7.** A sheet formed from a thermoplastic resin according to claim 3.

**8.** Use, as a part of an inner box for an electrical refrigerator, of a sheet according to claim 6.

**9.** Use, as a part of an inner box for an electrical refrigerator, of a sheet according to claim 7.

FIG.1

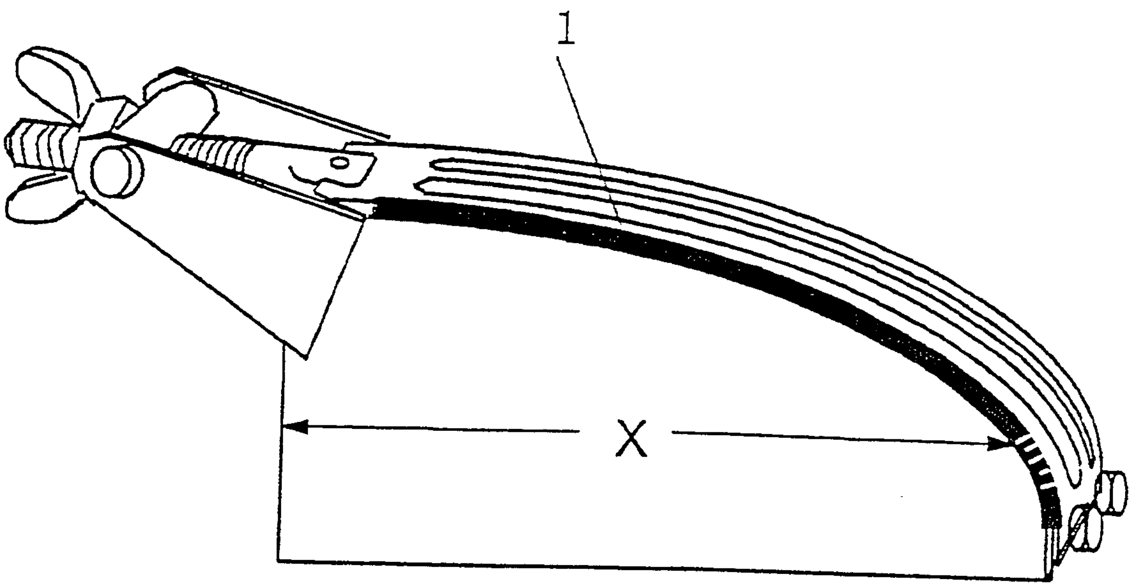

European Patent Office

# EUROPEAN SEARCH REPORT

Application Number
EP 00 30 3263

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| D,A | DATABASE WPI<br>Section Ch, Week 199636<br>Derwent Publications Ltd., London, GB;<br>Class A18, AN 1996-358588<br>XP002149384<br>& JP 08 169999 A (TORAY IND INC),<br>2 July 1996 (1996-07-02)<br>* abstract *<br>--- | 1-9 | C08L25/12<br>C08L55/02<br>C08J5/18<br>F25D23/06<br>//(C08L25/12,<br>23:08,55:02),<br>(C08L25/12,<br>23:08,55:02,<br>73:00) |
| D,A | DATABASE WPI<br>Section Ch, Week 199630<br>Derwent Publications Ltd., London, GB;<br>Class A13, AN 1996-295578<br>XP002149385<br>& JP 08 127626 A (TORAY IND INC),<br>21 May 1996 (1996-05-21)<br>* abstract *<br>--- | 1-9 | |
| A | DATABASE WPI<br>Section Ch, Week 199820<br>Derwent Publications Ltd., London, GB;<br>Class A18, AN 1998-225240<br>XP002149386<br>& JP 10 067902 A (TORAY IND INC),<br>10 March 1998 (1998-03-10)<br>* abstract *<br>--- | 1-9 | TECHNICAL FIELDS SEARCHED (Int.Cl.7)<br>C08L<br>C08J<br>F25D |
| A | CHEMICAL ABSTRACTS, vol. 125, no. 24,<br>9 December 1996 (1996-12-09)<br>Columbus, Ohio, US;<br>abstract no. 302335,<br>XP002149383<br>* abstract *<br>& JP 08 231819 A (ASAHI CHEMICAL IND, JAPAN) 10 September 1996 (1996-09-10)<br>----- | 1-9 | |

The present search report has been drawn up for all claims

| Place of search | Date of completion of the search | Examiner |
|---|---|---|
| THE HAGUE | 5 October 2000 | DE LOS ARCOS, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 3263

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2000

| Patent document cited in search report | Publication date | Patent family member(s) | Publication date |
|---|---|---|---|
| JP 8169999 A | 02-07-1996 | JP 2996115 B | 27-12-1999 |
| JP 8127626 A | 21-05-1996 | NONE | |
| JP 10067902 A | 10-03-1998 | NONE | |
| JP 8231819 A | 10-09-1996 | NONE | |
| JP 2000159959 A | 13-06-2000 | NONE | |
| JP 2000159954 A | 13-06-2000 | NONE | |

EPO FORM P0459

For more details about this annex : see Official Journal of the European Patent Office, No. 12/82